# EUROPEAN PATENT SPECIFICATION

(11) **EP 3 390 015 B1**
(45) Date of publication and mention of the grant of the patent: **10.06.2026**
(21) Application number: 16805431.0
(22) Date of filing: 02.12.2016
(51) Int. Cl.: B29C 70/16, B29C 53/58

(54) **TAPES**
BÄNDER
RUBANS

(30) Priority: 18.12.2015 WO PCT/EP2015/201406; 21.07.2016 WO PCT/EP2016/180547
(43) Date of publication of application: 24.10.2018
(73) Proprietor: Envalior B.V., 6167 RD Geleen (NL)
(72) Inventor: KEESTRA, Beert Jacobus, 6167 RD GELEEN (NL); VORAGE, Tim Leonardus Maria, 6167 RD GELEEN (NL); LIGTHART, Godefridus Bernardus Wilhelmus Leonardus, 6167 RD GELEEN (NL)
(74) Representative: Envalior Association
(86) International application number: PCT/EP2016/079601
(87) International publication number: WO 2017/102381

(56) References cited:
- WO-A1-2012/002410
- JP-A- 2013 159 675
- JP-A- 2014 173 006
- JP-A- 2014 173 006
- US-A1- 2013 105 501
- US-A1- 2014 170 353
- US-A1- 2014 170 353
- US-A1- 2014 272 227
- DSM: "Automobile natural gas tanks take the pressure with composites in DSM high performance thermoplastics - 10 - 2014 - News - DSM", 30 October 2014 (2014-10-30), XP055261321, Retrieved from the Internet <URL:http://www.dsm.com/products/akulon/en_US/informationcenter-news/2014/10/2014-10-30-automobile-natural-gas-tanks-take-the-pressure-with-composites-in-dsm-high-performance-thermoplastics.html> [retrieved on 20160329]
- TORAYCA TORAY: "T700S DATA SHEET", 1 January 2003 (2003-01-01), XP093244773, Retrieved from the Internet <URL:https://www.rockwestcomposites.com/on/demandware.static/Sites-RWC-Site/Sites-rwc-master-catalog/-/downloads/T700SDataSheet.pdf?srsltid=AfmBOorWb5znvs8XTMOr9dFnoIBIkTUwPtXHnEjaVXHUBEhbEqcw5R9D>
- DSM: "Automobile natural gas tanks take the pressure with composites in DSM high performance thermoplastics - 10 - 2014 - News - DSM", 30 October 2014 (2014-10-30), XP055261321, Retrieved from the Internet <URL:http://www.dsm.com/products/akulon/en_US/informationcenter-news/2014/10/2014-10-30-automobile-natural-gas-tanks-take-the-pressure-with-composites-in-dsm-high-performance-thermoplastics.html> [retrieved on 20160329]

## Description

This invention relates to tapes comprising endless fibers and a thermoplastic matrix, as well as applications thereof, such as pressure vessels and a method for preparing a vessel employing the tape.

Tapes, also referred to as bands and laminates, are known and are for example described in US2014/272227. This disclosure describes a method for production of laminates in which endless fibers are employed together with a list of thermoplastic materials. A disadvantage of these laminates is that it may suffer from exposure to acids, which may lead to failure of the product. Especially in pressure vessels, in which gasses and/or liquids are contained, this property is essential. Pressure vessels need to be safe during the whole life time of the product and may not fail due to exposure to for example acidic media, such as battery acids, acidic rain, etc.

JP2014173006 concerns a polyamide composite material for a structural material, which maintains a high elastic modulus and strength even under equilibrium moisture absorption, and which has resistance to thermal deformation. The solution described involves of a carbon fibre reinforced copolyamide comprising inter alia monomer units with a para-phenylene structure.

US2014/0170353 A1 concerns composite components and method for forming composite components. The method disclosed involves inserting a continuous fiber reinfored tape into a moulding device, and feeding a parison into the molding device. A composite component includes a blow molded inner layer comprising a thermoplastic material. The composite component further includes an outer layer bonded to the inner layer during blow molding of the inner layer. The outer layer includes a continuous fiber reinforced thermoplastic tape. US2014/0170353 A1 does not describe particular combinations of specific material making up the tape.

XP055261321, an internet publication "DSM: Automobile natural gas tanks take the pressure with composites in DSM high performance plastics - 10 - 2014" concerns developments towards realizing type IV and type V vessels. The report mentions examples of polymers and fibers that may be considered for use in a tape and further application in pressure vessels. Some thermoset resins and some thermoplastic resins are suggested.

JP2013159675 relates to a composite material made of long carbon fibers and polyamide resins, specifically resin materials having a crystallization rate in the melt to provide good impregnability. All examples employ a combination or copolymer of at least two polyamide resins.

WO2012/002410 A1 concerns a carbon fiber wound tape formed from a complex that includes carbon fiber and an aromatic polyamide resin or an aliphatic polyamide resin that is wound around a cylindrical core material.

It is thus an object of the present invention to provide tapes, which exhibit a higher resistance against acids as compared to those in the prior art. Surprisingly, a tape, in accordance with claim 1, exhibits higher acid resistance, as evidenced by experiments as shown below. Surprisingly, the tape according to the invention exhibits higher resistance to acids as compared to tapes comprising general polyamides, such as PA-6 and PA-66. The tape may be advantageously employed in pressure vessels, as this results in a pressure vessel which combines high mechanical properties with a higher acid resistance. The tape according to the invention exhibits a higher burst pressure when for example employed in a vessel, and allows recycling into prime applications.

### Tape

With tape herein is understood as an elongated body having a longitudinal direction, a width, a thickness and a cross-sectional aspect ratio, i.e. the ratio of thickness to width. Said cross-section is defined as substantially perpendicular to the longitudinal direction of the tape. The longitudinal direction or machine direction of the tape essentially corresponds to the orientation of the endless fibers. The length dimension of a tape of the invention is not particularly limited. The length may exceed 10 km and mainly depends on the endless fibres and the process used to produce the tape. Nevertheless said tape can for convenience reasons be manufactured to smaller sizes, according to the requirements of the envisioned applications.

The tape according to the invention has a thickness of between 50 micrometer and 300 micrometer. If used for applications in which wrapping of a tape is employed, the thickness is preferably between 100 micrometer and 300 micrometer as thicker tapes are more difficult to wrap.

By width is herein understood the largest dimension between two points on the perimeter of a cross-section of the tape, said cross-section being orthogonal to the length of the tape. By thickness is herein understood a distance between two points on the perimeter of said cross-section, said distance being perpendicular on the width of the tape. The width and the thickness of a tape can be measured according to known methods in the art, e.g. with the help of a ruler and a microscope or a micrometer, respectively.

The tape according to the invention comprises at least one layer and may thus be a single layer or two layers or even more layers If a tape has more than one layer it is also referred to as multi-layer. If the tape is a multi-layer, the tape may comprise further layers such as aluminum, polymer compositions such as polyamides and EVOH. The tape may also comprise a further layer not comprising endless fiber. Preferably, the tape consists of one layer as this facilitates preparation of the tape.

Surprisingly, the tape according to the invention exhibits higher acid resistance in combination with a lower creep. This is advantageous for applications which require high structural integrity and are prone to exposure to acids, such as vessels for use in automotive industry.

Surprisingly, the tape according to the invention shows good flexural strength.

The thickness of the tape is between 50 to 300 micron and more preferably between 100 and 300 micrometer and even more preferred between 150 to 250 micron.

The width of the tape is between 5 mm and 10.0 cm, preferably between 1 cm and 8 cm, more preferably between 2 cm and 6 cm. If a tape has a low width, it needs more wrappings and is therefore energy and time consuming. If the tape has a very large width, bigger areas can be covered in one winding step, but winding on curved surfaces is more difficult and results in inefficiencies.

The tape according to the invention may be prepared by the following method: endless fibers are provided and spread and fed to a melt of the thermoplastic matrix and subsequently cooled to form a tape.

With thermoplastic matrix is herein understood to consist of a homopolyamide chosen from the group of consisting of PA-610 and PA-612. Endless fiber is herein understood to refer to at least one endless fiber, and may also refer to more fibers.

### Polyamide

The tape according to the invention comprises at least one layer comprising a thermoplastic matrix consisting of a homopolyamide chosen from the group of consisting of PA-610 and PA-612, wherein the one or more polyamides have a CH2-ratio between 5.7 and 8.5, calculated by
- identifying the number of different aliphatic monomeric units in the one or more polyamides;
- determining the number of CH2 groups per aliphatic monomeric unit for each of these different aliphatic monomeric units;
- calculating the sum of the so determined numbers of CH2 groups;
- dividing said sum by the number of different aliphatic monomeric units in the one or more polyamides;
taking into account only the aliphatic monomeric units present in the one or more polyamides in an amount of at least 10 wt% with respect to the total weight of the one or more polyamides.

Monomeric units derived from aliphatic monomers which are present in the one or more polyamides in an amount of less than 10 wt%, are not taken into account for the CH2-ratio, as these are considered not to contribute towards structural integrity of the tape. Non-aliphatic monomeric units are also not taken into account for determining the CH2-ratio.
For convenience, in table 1 a list is provided of common polyamides and their CH2-ratio.

**Table 1; Polyamides and their CH2-ratio**

| Name of polyamide | Sum of CH2 groups in aliphatic monomeric units > 10 wt% in the one or more polyamides | number of aliphatic monomeric units | CH2 ratio |
|---|---|---|---|
| PA-6 | 5 | 1 | 5 |
| PA-66 | 6+4 | 2 | 5 |
| PA-410 | 4+8 | 2 | 6 |
| PA-610 | 6+8 | 2 | 7 |
| PA-510 | 5+8 | 2 | 6.5 |
| PA-612 | 6+10 | 2 | 8 |
| PA-6T | 6 | 1 | 6 |
| PA-9T | 9 | 1 | 9 |
| PA-10T | 10 | 1 | 10 |
| PA-11 | 10 | 1 | 10 |
| PA-12 | 11 | 1 | 11 |
| PA-612/9T, in which 9T is present in an amount of less than 10 wt% | 6+10 | 2 | 8 |
| PA-612/9T, in which 9T is present in an amount of more than 10 wt% | 6+10+9 | 3 | 8.3 |
| PA-410/PA-6 50/50 wt% blend | 4+8+5 | 3 | 5.7 |
| PA-410/PA-6 95/5 wt% blend | 4+8 | 2 | 6 |

The polyamides are noted as described in Nylon Plastics Handbook, Melvin I. Kohan, Hanser Publishers, 1995, page 5. PA-6 is polycaprolactam, in which the monomeric units are derived from caprolactam. PA-66 is poly(hexamethylene adipamide) in which the monomeric units are derived from hexamethylene diamine and adipic acid.

PA-6/PA-66 refers to a blend of PA-6 and PA-66, whereas PA-6/66 refers to a copolyamide. PA-410 is a polyamide in which the monomeric units are derived from 1,4 -diaminobutane and sebacic acid.

For determining a monomeric unit, the weight of a monomeric unit is defined for a monomeric unit derived from a diamine as the part -NH-X-NH- in which X denotes the part between the diamine groups. The weight of a monomeric unit derived from a diacid is the part -C(O)-X-C(O)-, in which X denotes the part between the acid groups. For a monomeric unit derived from an aminoacid or a lactam, the monomeric unit is defined as -NH-X-C(O)-, wherein X denotes the part between the amine and acid group. The split between the monomeric units is thus always a the C-N bond of the amide group

The upper limit of the CH2-ratio is less than 8.5 as this provides additional stiffness as compared to polyamides having a higher CH2 -ratio. The CH2-ratio of tape according to the invention as claimed is between 5.7 and 8.5, as these polyamides provide the optimum of properties including barrier properties and structural integrity and acid resistance.

The polyamide employed in tape according to the invention as claimed is a homopolyamide in contrast to a copolyamide or blend. Homopolyamide is herein defined as a polyamide which consists of monomeric unit derived from an aminoacid, or which consists of monomeric units derived from one type of diamine and one type of diacid. Homopolyamides are referred to as either PA-X, in which X is a monomeric unit derived from one type of aminoacid, or PA-XY, in which X is a monomeric unit derived from one type of diamine and Y is a monomeric unit derived from one type of aminoacid. Employing homopolyamides has the advantage that the tape can be more easily prepared as preparation of a homopolyamide may be easier than a copolyamide or blend. Also recycling of the tape is easier as compared to a tape made with a copolyamide or blend. Blends and copolyamides may have the disadvantage that there may be no distinct melting temperature, which makes it more difficult to process. Also degradation may be observed more often for blends and copolyamides, which is undesirable.

The polyamide is a homopolyamide chosen from the group consisting of PA-610 and PA-612, as this combines easy preparation of the polyamide and sufficient heat deflection temperature (HDT) and low moisture uptake and sufficient chemical resistance and recycling of the tape.

The amount and type of monomeric units may be determined by NMR spectroscopy.

### Endless fiber

The tape according to the invention comprises endless fiber. Endless fiber as such is known in the art and also referred to as continuous fiber and is herein understood to have an aspect ratio of at least 500. For example, the endless fiber in the tape may have a length of several hundreds of metres.

The endless fiber present in the tape according to the invention is chosen from the group consisting of glass fiber. Preferably, the endless fiber has a sizing in order to improve adhesion between the fiber and the polyamide.

The volume % of the endless fiber in the layer of the tape lies between 40 and 65 volume % as compared to the total volume of the layer, preferably the volume percentage is between 40 and 55 vol%.

It is usually desirable to have a volume percentage of endless fiber as high as possible, as this contributes to the strength of the tape.

### Other ingredients

The thermoplastic matrix of the at least one layer of the tape optionally comprises any of the following ingredients such as heat stabilizer, flame retardant, colorant, lubricant, mold release agent, UV stabilizer, impact modifier, nucleating agent, nigrosine, laser absorbing additives and combinations thereof. These ingredients are known to a person skilled in the art and are usually present in minor amounts such as for example between 0.001 wt% and 10 wt% with respect to the total weight of the thermoplastic matrix.

Preferably, the thermoplastic matrix comprises heat stabilizers, chosen from the group of inorganic stabilizers, organic stabilizers comprising a primary antioxidant group, organic stabilizers comprising a hindered amine group and combinations thereof. Preferably, the heat stabilizers are present in an amount of between 0.01 wt% and 8 wt% with respect to the total weight of the thermoplastic matrix in the layer. Inorganic stabilizers are known and are for example a copper compound and a salt containing a halogenide acid group, for example an iodide or a bromide salt. Good examples of suitable copper compounds include copper (I) halogenides, preferably copper iodide (Cul) and further copper salts like for instance copper acetate, copper sulfate and cupper stearate. As the salt containing an halogenide acid group preferably potassium bromide (KBr) of potassium iodide (KI) are used. Most preferred a combination of copper iodide and potassium bromide (Cul/KBr) is used. Organic stabilizers comprising a primary antioxidant group are radical scavengers such as for example phenolic antioxidants as well as aromatic amines, and are known as such. Suitable organic stabilisers comprising a hindered amine (also known as Hindered Amine Stabilizer; HAS) in the tape according to the invention are for example HAS compounds derived from a substituted piperidine compound, in particular any compound which is derived from an alkyl-substituted piperidinyl or piperazinone compound, and substituted alkoxy peridinyl compounds. More preferably, the thermoplastic matrix comprises a combination of heat stabilizer in which an inorganic stabilizer is employed in combination with an organic stabilizer comprising both a hindered amine group and an organic stabilizer comprising a primary antioxidant. The combination of these 3 stabilizers provides an improved UV stability.

### Applications

The invention also relates to applications in which the tape is employed for preparing the application, such as vessels, pipes, sheet material, local reinforcement.

The invention also relates to a process for preparing a vessel comprising the following steps:
a. Providing a support;
b. providing a tape as disclosed above;
c. Wrapping the tape around the support while consolidating the tape by heat, thereby creating a hollow body;
d. Cooling the hollow body to become solid.

When a tape according to the invention is employed, vessels may be obtained which exhibit high burst pressure. These vessels may exhibit a burst pressure of at least 25 bar, which is usually required for vessels containing liquefied petroleum gas (LPG) or air or water, or nitrogen or oxygen. Surprisingly, the vessel may exhibit a burst pressure of at least 300 bar, which is for example required for vessels containing compressed natural gas (CNG). For hydrogen vessels a burst pressure of at least 1500 bar may be reached with a vessel according to the invention. Burst pressure is measured according to the hydrostatic pressure burst test as described in ECE R110. Surprisingly, these vessels may pass the Bonfire test.

The tape may be employed in a process as disclosed in US2013105501, thus by wrapping the tape around a mandrel and applying heat to consolidate the tapes and subsequent cooling. The tape may also be employed by a so-called laser method, which is for example disclosed in WO14040871A1. If a laser method is employed, the tape may need the presence of a laser absorbing additive in order to produce heat from the laser. Laser absorbing additives are known to a person skilled in the art and include for example carbon black. Other examples of laser light absorbers include oxides, hydroxides, sulphides, sulphates and phosphates of metals such as copper, coated bismuth, tin, aluminum, zinc, silver, titanium, antimony, manganese, iron, nickel and chromium, laser light absorbing (in)organic dyes or metal oxide coated flakes. Preferably the laser light absorbers are chosen from antimony trioxide, tin dioxide, barium titanate, titanium dioxide, aluminum oxide, copper-hydroxy-phosphate, copper-ortho-phosphate, copper-hydroxide, antimony-tin oxide, anthraquinone or azo dyes.

The support may be a mandrel, as disclosed in the process of US2013105501, or a liner prepared by for example as disclosed above, inflatable balloon, inert filler such as sand or talcum. The support may thus become part of the hollow body or may be taken out after production of the hollow body. If the support is a mandrel, the mandrel may be removed after step d.

Optionally, before step c) another material may be wrapped around the support for example to increase barrier properties to form a liner, as disclosed above. This material may comprise from for example EVOH, PA-6, PA-66, PA-410, PA-610, PA-612, PA-6T/6I, metal or combinations thereof. This is in particular beneficial if the support will not become part of the vessel. The other material may then be employed to increase barrier properties. Preferably, the other material before step c) is chosen from PA-6, PA-410, as these materials have a good barrier performance and recyclability.

Consolidation is performed preferably by heat, such as provided by a laser, as for example an infrared laser, or heating elements such as an oven.

### Examples

Measurements were performed on various thermoplastic matrices in order to show their suitability for use in tapes. Various homopolyamides with various CH2-ratios were tested. Results are given in Table 2.

Acid resistance test: 15 Izod bars with the polyamides as described in Table 2, were exposed to a solution of 30% H2SO4 in a petri-dish. The level of liquid was 2 mm so that the 4 mm thick bars were immersed on one side only. Separate petri-dishes were used for every take-out time (25, 50 and 100 hrs). After immersion, the bars were washed with an excess of water taking care that the upper half did not come in contact with the strong acid. After washing, the bars were dried with paper. Flexural test according to ISO178: the acid treated surface faced downward during the flexural test (non-exposed side facing up-wards).

Table 2 clearly indicates that polyamides with a CH2-ratio between 5.5 and less than 10, exhibited a combination of high acid resistance and good structural integrity. A good structural integrity is observed when the flex modulus is sufficient high in combination with a higher HDT. Examples 1 to 4 all exhibited a sufficient high flex modulus in combination with a high HDT, which makes them good candidates to be employed in a vessel, whereby examples 2 and 3 are according to the invention as claimed and examples 1 and 4 are comparative examples not according to the claimed invention.

Polyamide being PA-410 (not claimed), example 1, clearly combines a high flex modulus with high HDT, which surprisingly when employed in a tape, showed a very stable long term structural integrity.

A hollow body was prepared by wrapping a tape comprising PA-6. Subsequently a tape according to the invention, comprising 65 wt% endless glass fibers and 35 wt% PA-410 was wrapped, based on the total weight of the tape around a mandrel while using heat to consolidate these wrappings. The vessel was created by attaching bosses to the hollow body, as known in the prior art. The vessel was filled with natural gas and the vessel was subjected to the Bonfire test. This test is described in ECE R110. In short, during Bonfire test, a vessel while containing gas, is subjected to 850 °C at the outside of the vessel. A vessel passes the test if the vessel does not explode, but the vessel vents the contained gas through a pressure relief device. Surprisingly, the vessel produced with a tape according to the invention, passed the Bonfire test, even though the melting temperature of PA-410 is 248 °C, thus substantially lower than the heat the vessel was subjected to. This is a major achievement as this vessel allows for thermoplastic composite pressure vessels which can contain high amounts of gasses or liquids while maintaining a high safety standard and after the life time the vessel may be recycled into prime applications, which was not possible for thermoset tanks.

Surprisingly, the employment of homopolyamides provides a tape which combines high acid resistance and sufficient flex modulus in combination with a higher HDT.

**Table 2; Various polyamides and results**

| | ISO | comparative example A | comparative example B | example 1 (not claimed) | example 2 | example 3 | example 4 (not claimed) | comparative example C | comparative example D |
|---|---|---|---|---|---|---|---|---|---|
| | | PA-6 | PA-66 | PA-410 | PA-610 | PA-612 | PA-1010 | PA-11 | PA-12 |
| CH2-ratio | | 5 | 5 | 6 | 7 | 8 | 9 | 10 | 11 |
| flex modulus (GPa) | ISO178 | 2.84 | 2.94 | 2.7 | 2.05 | 2.38 | 1.74 | | 1.31 |
| permeability CNG @25C (cm3.mm/m2/day/bar) | | 0.1 | | | | | | 0.6 | |
| permeability H2 @20°C (mol/m/s/Pa) | | 1.1E-16 | | | | | | 6.7E-16 | |
| flex modulus after 100 hrs acid exposure (GPa) | | 0.84 | 0.88 | 2.02 | 1.35 | 1.89 | | | |
| retention after H2SO4 exposure (%) | | 29.8 | 29.9 | 74.5 | 65.9 | 79.2 | | | |
| HDT 0.45MPa | ISO-R-75 method B | 150 | 215 | 175 | 140 | 135 | 110 | 145 | 135 |
| HDT 1.8 MPa | ISO-R-75 method A | 50 | 75 | 75 | 55 | 62 | 50 | 50 | 55 |
| Melting temperature (°C) | | 222 | 262 | 248 | 222 | 218 | 202 | 189 | 179 |
| | | | | | | | | | |

## Claims

1. Tape, comprising at least one layer comprising
a. endless fiber having an aspect ratio of at least 500 in a total amount of at least 40 volume % to 65 volume % as compared to the total volume of the layer, wherein the endless fiber is chosen from glass fiber, and
b. a thermoplastic matrix consisting of a homopolyamide chosen from the group consisting of PA-610, PA-612,
c. and optionally any of the following ingredients: heat stabilizer, flame retardant, colorant, lubricant, mold release agent, UV stabilizer, impact modifier, nucleating agent, nigrosine, laser absorbing additive as well as combinations thereof;
wherein the thickness of the tape is between 50 to 300 micrometer, and the width is between 5 mm and 10.0 cm, and
wherein the one or more polyamides have a CH2-ratio between 5.7 and 8.5,
calculated by
• identifying the number of different aliphatic monomeric units in the one or more polyamides;
• determining the number of CH2 groups per aliphatic monomeric unit for each of these different aliphatic monomeric units;
• calculating the sum of the so determined numbers of CH2 groups;
• dividing said sum by the number of different aliphatic monomeric units in the one or more polyamides;
taking into account only the aliphatic monomeric units present in the one or more polyamides in an amount of at least 10 wt% with respect to the total weight of the one or more polyamides.

2. Tape according to claim 1, wherein the tape consists of one layer.

3. Tape according to any of the claims 1 or 2, wherein the tape comprises another layer which does not comprise endless fiber, chosen from EVOH, PA-6, PA-66, PA-410, PA-6T/6I and combinations thereof and copolyamides thereof.

4. Process for preparing a vessel comprising the following steps:
a. Providing a support;
b. providing a tape according to any of the claims above;
c. Wrapping the tape around the support while consolidating the tape by heat, thereby creating a hollow body;
d. Cooling the hollow body to become solid.

5. Process according to claim 4, in which the support is a mandrel and which mandrel is removed after step d.

6. Process according to claim 4 or 5, wherein before step c. another material is wrapped around the support, which material comprises EVOH, PA-6, PA-66, PA410, PA610, PA612, metal or combinations thereof.

7. Pipe, sheet material or local reinforcement, prepared by employing the tape according to any of the claims 1 to 3.

## Patentansprüche

1. Band, umfassend wenigstens eine Schicht, umfassend
a. Endlosfaser mit einem Aspektverhältnis von wenigstens 500 in einer Gesamtmenge von wenigstens 40 Vol.-% bis 65 Vol.-%, bezogen auf das Gesamtvolumen der Schicht, wobei die Endlosfaser aus Glasfaser ausgewählt ist, und
b. eine thermoplastische Matrix, bestehend aus einem Homopolyamid, ausgewählt aus der Gruppe bestehend aus PA-610, PA-612,
c. und gegebenenfalls einen der folgenden Inhaltsstoffe: Wärmestabilisator, Flammhemmer, Farbmittel, Schmiermittel, Formtrennmittel, UV-Stabilisator, Schlagzähmodifikator, Keimbildner, Nigrosin, laserabsorbierendes Additiv sowie Kombinationen davon;
wobei die Dicke des Bandes zwischen 50 und 300 Mikrometer beträgt und die Breite zwischen 5 mm und 10,0 cm beträgt, und
wobei das eine oder mehrere Polyamide ein CH2-Verhältnis zwischen 5,7 und 8,5 aufweisen, berechnet durch
• Bestimmen der Anzahl von verschiedenen aliphatischen Monomereinheiten in dem einen oder den mehreren Polyamiden;
• Bestimmen der Anzahl von CH2-Gruppen pro aliphatischer Monomereinheit für jede dieser verschiedenen aliphatischen Monomereinheiten;
• Berechnen der Summe der so bestimmten Anzahl von CH2-Gruppen;
• Teilen der Summe durch die Anzahl von verschiedenen aliphatischen Monomereinheiten in dem einen oder den mehreren Polyamiden;
wobei nur die in dem einen oder den mehreren Polyamiden in einer Menge von wenigstens 10 Gew.-% bezogen auf das Gesamtgewicht des einen oder der mehreren Polyamide enthaltenen aliphatischen Monomereinheiten berücksichtigt werden.

2. Band nach Anspruch 1, wobei das Band aus einer Schicht besteht.

3. Band nach einem der Ansprüche 1 oder 2, wobei das Band eine weitere Schicht umfasst, die keine Endlosfasern umfasst, ausgewählt aus EVOH, PA-6, PA-66, PA-410, PA-6T/6I und Kombinationen davon und Copolyamiden davon.

4. Verfahren zur Herstellung eines Behälters, umfassend die folgenden Schritte:
a. Bereitstellen eines Trägers;
b. Bereitstellen eines Bandes nach einem der vorstehenden Ansprüche;
c. Wickeln des Bandes um den Träger, während das Band durch Wärme verfestigt wird, wodurch ein Hohlkörper erzeugt wird;
d. Abkühlen des Hohlkörpers, um fest zu werden.

5. Verfahren nach Anspruch 4, wobei der Träger ein Dorn ist und wobei der Dorn nach Schritt d. entfernt wird.

6. Verfahren nach Anspruch 4 oder 5, wobei vor Schritt c. ein weiteres Material um den Träger gewickelt wird, wobei das Material EVOH, PA-6, PA-66, PA410, PA610, PA612, Metall oder Kombinationen davon umfasst.

7. Rohr, Blechmaterial oder lokale Verstärkung, hergestellt durch Verwendung des Bandes nach einem der Ansprüche 1 bis 3.

## Revendications

1. Ruban, comprenant au moins une couche comprenant
a. une fibre sans fin ayant un rapport d'aspect d'au moins 500 dans une quantité totale d'au moins 40 % en volume à 65 % en volume par rapport au volume total de la couche, dans lequel la fibre sans fin est choisie parmi une fibre de verre, et
b. une matrice thermoplastique constituée d'un homopolyamide choisi dans le groupe constitué par PA-610, PA-612,
c. et éventuellement l'un quelconque des ingrédients suivants : stabilisant thermique, agent ignifugeant, matière colorante, lubrifiant, agent de démoulage, stabilisant aux UV, modificateur de résistance aux chocs, agent de nucléation, nigrosine, additif absorbant le laser ainsi que leurs combinaisons ;
dans lequel l'épaisseur du ruban est comprise entre 50 et 300 micromètres, et la largeur est comprise entre 5 mm et 10,0 cm, et
dans lequel le ou les polyamides ont un indice de CH2 compris entre 5,7 et 8,5, calculé en
• identifiant le nombre d'unités monomères aliphatiques différentes dans le ou les polyamides ;
• déterminant le nombre de groupes CH2 par unité monomère aliphatique pour chacune de ces différentes unités monomères aliphatiques ;
• calculant la somme des nombres ainsi déterminés de groupes CH2 ;
• divisant ladite somme par le nombre d'unités monomères aliphatiques différentes dans le ou les polyamides ;
en tenant compte uniquement des unités monomères aliphatiques présentes dans le ou les polyamides en une quantité d'au moins 10 % en poids par rapport au poids total du ou des polyamides.

2. Ruban selon la revendication 1, dans lequel le ruban est constitué d'une couche.

3. Ruban selon l'une quelconque des revendications 1 ou 2, dans lequel le ruban comprend une autre couche qui ne comprend pas de fibre sans fin, choisie parmi EVOH, PA-6, PA-66, PA-410, PA-6T/6I et leurs combinaisons et leurs copolyamides.

4. Procédé de préparation d'un récipient comprenant les étapes suivantes :
a. fourniture d'un support ;
b. fourniture d'un ruban selon l'une quelconque des revendications ci-dessus ;
c. enveloppement du ruban autour du support tout en consolidant le ruban par de la chaleur, créant ainsi un corps creux ;
d. refroidissement du corps creux pour devenir solide.

5. Procédé selon la revendication 4, dans lequel le support est un mandrin et lequel mandrin est enlevé après l'étape d.

6. Procédé selon la revendication 4 ou 5, dans lequel, avant l'étape c., un autre matériau est enveloppé autour du support, lequel matériau comprend un EVOH, PA-6, PA-66, PA410, PA610, PA612, métal ou leurs combinaisons.

7. Tuyau, matériau en feuille ou renforcement local, préparé en employant le ruban selon l'une quelconque des revendications 1 à 3.
